# EUROPÄISCHE PATENTSCHRIFT

(11) **EP 1 398 929 B1**
(45) Veröffentlichungstag und Bekanntmachung des Hinweises auf die Patenterteilung: **22.11.2006**
(21) Anmeldenummer: 02020645.4
(22) Anmeldetag: 13.09.2002
(51) Int. Cl.: H04L 27/00, H04L 1/00

(54) **Verfahren und Vorrichtung in einem Kommunikationssystem zum empfängerseitigen Bestimmen einer senderseitig verwendeten Modulation bei adaptiver Modulation**
Method and Apparatus used at a receiver for determining the modulation used by a transmitter in a communication system with adaptive modulation
Méthode et dispositif employés au niveau d'un récepteur pour déterminer la modulation utilisée par un transmetteur dans un système de communication à modulation adaptative

(43) Veröffentlichungstag der Anmeldung: 17.03.2004
(73) Patentinhaber: SIEMENS AKTIENGESELLSCHAFT, 80333 München (DE)
(72) Erfinder: Giebel, Tobias, 21075 Hamburg (DE); Lampe, Matthias, 21073 Hamburg (DE); Rohling, Hermann, Prof., 38304 Wolfenbüttel (DE); Schulz, Egon, Dr., 80993 München (DE); Zirwas, Wolfgang, 82194 Gröbenzell (DE)

(56) Entgegenhaltungen:
- EP-A- 0 562 422
- WO-A-00/62498
- WO-A-99/39484
- WO-A-02/069591

## Beschreibung

Die Erfindung bezieht sich auf ein Verfahren in einem Kommunikationssystem zum empfängerseitigen Bestimmen einer senderseitig verwendeten Modulation bei adaptiver Modulation sowie eine Demodulationsvorrichtung in einem Kommunikationssystem zum Durchführen eines solchen Verfahrens.

Bei verschiedenartigen Kommunikationssystemen, beispielsweise dem UMTS (Universal Mobile Telecommunications System) als Mobilfunksystem oder WLAN (Wireless Local Area Network) als funkgestütztem Datennetz werden zur Übertragung von Daten über eine Funkschnittstelle zwischen zwei Stationen digitale Kodierungs- und Modulationsverfahren verwendet. Damit soll einerseits eine optimale Ausnutzung der verfügbaren Ressourcen der Funkschnittstelle und andererseits eine möglichst sichere, dass heißt verlustfreie Übertragung von Daten ermöglicht werden. Beispielhafte Modulationsverfahren sind das BPSK und das QPSK (Binary bzw. Quadrature Phase Shift Keying), welche im unkodierten Fall eine unterschiedliche Bandbreiteeffizienz bei unterschiedlicher Robustheit gegenüber Störungen des Übertragungskanals aufweisen. Bei diesen Verfahren werden einzelne Datenbit (BPSK) bzw. Paare von Datenbit (QPSK) vor dem Versenden jeweils einem von zwei bzw. vier verschiedenen zulässigen Phasenzuständen zugeordnet und entsprechend zu einem so genannten Symbol moduliert. Empfängerseitig wird ein derartiges empfangenes Symbol unter Kenntnis des senderseitig verwendeten Modulationsverfahrens entsprechend demoduliert, um die ursprünglichen Daten zurückzugewinnen.

Allgemein bekannt ist auch eine so genannte adaptive Modulation, welche beispielsweise in Zusammenhang mit Multiträger-Übertragungstechniken verwendet wird. Dabei wird senderseitig die Übertragungsfunktion des verfügbaren Kanals beobachtet, um subträgerspezifisch ein bestgeeignetes Modulationsverfahren davon abhängig auszuwählen und für die Modulation zu verwenden. Auf Subträgern, welche durch den Kanaleinfluss stark gedämpft werden, wird entsprechend ein niederwertiges Modulationsverfahren, ggf. gar kein Modulationsverfahren eingesetzt, wohingegen auf weniger stark gedämpften Trägern höherwertige Modulationsverfahren zum Einsatz kommen, um die Kapazität der Subkanäle bzw. Subträger bestmöglich auszunutzen.

Die Festlegung der auf den einzelnen Subträgern zu verwendenden Modulationsverfahren erfolgt mittels eines so genannten Ladealgorithmus. Bekannte Ladealgorithmen zielen entweder auf eine Maximierung der Gesamt-Datenrate bei einer vorgegebenen festen Ziel-Bitfehlerrate oder auf eine Minimierung der Bitfehlerwahrscheinlichkeit bei einer fest vorgegebenen Datenrate, dass heißt einer vorgegebenen mittleren Anzahl von Bit pro Modulationssymbol ab. Algorithmen der letztgenannten Art sind in der Regel aufwändiger, jedoch ist die wohldefinierte Datenrate für höhere Protokollschichten des Kommunikationssystems einfacher zu handhaben.

Empfängerseitig muss die Demodulation eines empfangenen Symbols entsprechend dem vom Sender verwendeten Ladeschema durchgeführt werden. Wurde beispielsweise für eine erste Abfolge von zu übertragenden Symbolen keine Modulation verwendet, d.h. die betreffenden Symbole tragen keine Nutzinformation, und für eine zweite Folge von zu übertragenden Symbolen QPSK verwendet, so müssen empfängerseitig die ersten empfangenden Symbole als unmodulierte Symbole behandelt werden, d.h. es können keine Daten zurückgewonnen werden, während die zweite Folge von Symbolen als QPSK-modulierte Symbole behandelt und entsprechend demoduliert werden müssen. Damit die empfängerseitige Station über das senderseitig zuvor verwendete Ladeschema verfügt, ist eine Signalisierung zwischen der senderseitigen und der empfängerseitigen Station erforderlich.

Diskutiert wird auch die Möglichkeit, dass die empfängerseitige Station die entsprechend erforderliche Information über die senderseitig verwendeten Modulationsverfahren eigenständig aus dem Empfangssignal bzw. den empfangenen Symbolen rekonstruiert.

Aus der D1 (WO 99/39484 A2) ist ein Übertragungsverfahren mit einer senderseitigen Nutzung von zumindest zwei Modulationsverfahren zur Modulation von Signale bekannt. Empfängerseitig werden empfangene Signale mit einem jeweils dem Modulationsverfahren entsprechenden Demodulationsverfahren demoduliert. Anschließend wird zu jedem Modulationsverfahren eine korrespondierende Impulsantwort generiert, und anhand der Impulsantworten eine Abschätzung des sendeseitig verwendeten Modulationsverfahrens durchgeführt, um das entsprechende Signal einem Detektor zuzuführen.

Aus der D2 (WO 00/62498 A1) ist ein Verfahren zum Empfangen und Dekodieren von mit unterschiedlichen Modulationsverfahren modulierten Signalen bekannt, bei dem ein Block mit digitalen Informationen in eine Anzahl von Sub-Blöcken unterteilt ist, und jeder Sub-Block unter Verwendung eines individuell ausgewählten Demodulationsverfahrens demoduliert wird. Die demodulierten Sub-Blöcke werden anschließend wieder zusammengefügt und einer Dekodierung zugeführt, in der den digitalen Informationen der Sub-Blöcke jeweils so genannte Soft-Dekodierungs-Werte zugeordnet werden. Diese Werte werden nachfolgend für eine Entscheidung darüber, ob für den jeweiligen Sub-Block ein korrektes Demodulationsverfahren gewählt wurde oder nicht, verwendet.

Die Aufgabe der Erfindung besteht darin, ein Verfahren in einem Kommunikationssystem zum empfängerseitigen Bestimmen einer senderseitig verwendeten Modulation bei adaptiver Modulation anzugeben, welches eine einfache Bestimmung der senderseitig verwendeten Modulation ermöglicht, bzw. eine Vorrichtung zum Durchführen eines solchen Verfahrens anzugeben.

Diese Aufgabe wird durch ein Verfahren zum empfängerseitigen Bestimmen einer senderseitig verwendeten Modulation bei adaptiver Modulation sowie durch eine Vorrichtung mit den Merkmalen der unabhängigen Patentansprüche gelöst. Vorteilhafte Ausgestaltungen sind Gegenstand abhängiger Patentansprüche.

Vorteilhaft ist ein Verfahren zum empfängerseitigen Bestimmen einer senderseitig verwendeten Modulation bei adaptiver Modulation, bei dem empfängerseitig auf empfangene Symbole verschiedene oder alle der möglichen Demodulationsverfahren angewendet werden, woraufhin die erzielten Demodulationsergebnisse untersucht werden, um ein geeignetes der Demodulationsergebnisse zu bestimmen. Dies ermöglicht eine schnelle Demodulation empfangener Symbole mit dem jeweils richtigen Demodulationsverfahren auch ohne die zuvor signalisierte Information über das senderseitig verwendete Modulationsverfahren.

Eine entsprechende Demodulationsvorrichtung weist vorzugsweise eine Vielzahl von Demodulatoren für die verschiedenen möglichen Demodulationsverfahren, welchen ein empfangenes Symbol zugeführt wird, sowie eine Entscheidungseinrichtung auf, welche die Demodulationsergebnisse hinsichtlich einer korrekten Demodulation untersucht. Diese derart bestimmten demodulierten Daten werden dann für eine weitere Verarbeitung bereit gestellt. Umsetzbar ist eine derartige Demodulationsvorrichtung auch durch eine Steuereinrichtung in Form eines Prozessors, wie er in beispielsweise Mobilfunkgeräten und dergleichen verwendet wird, in Verbindung mit einem Speicher, in welchem entsprechende Algorithmen für die Durchführung der diversen Modulationsverfahren sowie Speicherraum zum Abspeichern von Symbolen und Daten verfügbar ist.

Vorteilhafterweise kann bei dem Bestimmen des best geeigneten Demodulationsergebnisses auch auf Informationen vorheriger oder ggf. nachfolgender demodulierter Symbole zurückgegriffen werden. Beispielsweise kann auf redundant übertragene Daten bzw. eine Kanalkodierung zurückgegriffen werden, welche über mehrere Symbole hinweg verteilt übertragen werden, so dass aus Inkonsistenzen gegenüber der empfängerseitig bekannten Kodiervorschrift auf die falsche Auswahl bei der Demodulation geschlossen werden kann.

Prinzipiell ist sowohl eine parallele als auch eine serielle Abarbeitung bei der Demodulation eines empfangenen Symbols mit den verschiedenen verfügbaren Demodulationsverfahren möglich. Mit Blick auf eine Zeitoptimierung ist dabei eine parallele Abarbeitung besonders vorteilhaft. Mit Blick auf eine Reduzierung beim baulichen Aufwand ist eine serielle Abarbeitung vorteilhaft, wobei in einem Demodulator oder Prozessor auf ein empfangenes Symbol nacheinander verschiedene Demodulationsverfahren angewendet und die Ergebnisse zwischengespeichert werden. Anschließend oder parallel zu der Demodulation mit weiteren Demodulationsverfahren kann dann die Entscheidungsprozedur durchgeführt werden, um ein geeignetes bzw. das wahrscheinlich geeignetste Demodulationsergebnis auszuwählen.

Bei der Demodulation und Entscheidungsfindung in Verbindung mit der Kanaldekodierung kann vorteilhafterweise ein für sich bekanntes Viterbi-Verfahren verwendet werden. Insbesondere ist auch der Einsatz eines erweiterten Trellis-Diagramms zur Auswahl der Verfahrensschrittabfolge vorteilhaft. Neben den möglichen Zuständen und Zustandsübergängen eines senderseitig verwendeten Faltungscodes können zusätzlich aufgrund einer entsprechenden Erweiterung des Trellis-Diagramms auch alle verfügbaren Demodulationsmöglichkeiten berücksichtigt werden. Anhand von Metrikvergleichen kann der Pfad der wahrscheinlichen Sendefolge und eines am wahrscheinlichsten verwendeten Modulationsverfahren-Ladeschemas für die einzelnen empfangenen Symbole bzw. Daten bestimmt werden. Vorteilhafterweise können in jedem Trellis-Knoten des Trellis-Diagramms alle einlaufenden Pfade bis auf denjenigen mit der besten akkumulierten Metrik verworfen werden.

Neben einer akkumulierten Metrik können in Trellis-Knoten auch weitere Kriterien zum Ausschluss von Pfaden mit einlaufenden Daten bzw. Symbolen in Betracht gezogen werden. Beispielsweise kann als Kriterium festgelegt werden, dass die Anzahl der einem Pfad zugeordneten Modulationssymbole in keinem Knoten die Anzahl der insgesamt übertragenen Symbole übersteigen darf. Auch andere besondere Eigenschaften des verwendeten Ladealgorithmus bei der Pfadauswahl sind berücksichtigbar.

Weiterhin können neben dem gewöhnlichen Viterbi-Algorithmus, der als Ausgabe eine hart entschiedene Bitfolge liefert, auch erweiterte Algorithmen, z.B. die für sich bekannten SOVA (Soft Output Viterbi Algorithm) oder MAP (Maximum a Posteriori), LOG-MAP,...) verwendet werden, die zusätzlich je Bit eine Information über die Zuverlässigkeit der Entscheidung an nachgeschaltete Verarbeitungsstufen liefern.

Beim Bestimmen des besten Modulationsergebnisses kann vorteilhafterweise auch jeweils eine gleiche Anzahl demodulierter Daten aus gegebenenfalls unterschiedlicher Anzahl von jeweiligen Symbolen der verschiedenen der Demodulationsverfahren verarbeitet werden.

Vorteilhafterweise ermöglicht die Verfahrensweise das empfängerseitige Bestimmen der senderseitig verwendeten Modulation ausschließlich anhand der empfängerseitig empfangenen Symbole, ohne dass eine zusätzliche Signalisierung der Modulationsparameter erforderlich ist. Empfängerseitig kann dabei bei fehlender Kenntnis über die senderseitig verfügbare Modulationsverfahrens-Auswahl auf alle empfängerseitig verfügbaren Demodulationsverfahren aus der Demodulationsverfahrens-Auswahl zurückgegriffen werden.

Diesbezüglich besonders vorteilhaft kann auch eine empfängerseitige Vorgehensweise vorteilhaft sein, bei der je nach momentaner Systemauslastung oder je nach momentanen Umgebungsbedingungen nur auf bestimmte verfügbare Demodulationsverfahren zurückgegriffen wird, um den Verarbeitungsaufwand zu reduzieren. Bei beispielsweise einer sehr hohen Systemauslastung ist es unwahrscheinlich, dass empfangene Symbole mit höherwertigen Modulationsverfahren moduliert wurden. Diese höherwertigen Modulationsverfahren können entsprechend bei der Demodulation unberücksichtigt bleiben. Umgekehrt können niederwertige Modulationsverfahren ausgelassen werden, wenn empfängerseitig eine sehr geringe Systemauslastung bei zudem guten Umgebungsbedingungen festgestellt wird, so dass von einer senderseitigen Modulation mit einem hochwertigen Modulationsverfahren auszugehen ist.

Insbesondere im Falle sehr schlechter Umgebungsbedingungen oder einer sehr hohen Systemauslastung ist auch die Möglichkeit zu berücksichtigen, dass einzelne Symbole von der Datenübertragung ausgenommen werden, d.h. auf diese keine Nutzinformation moduliert und keine Signalenergie aufgewendet wird.

Entsprechend müssen diese Nullsymbole empfängerseitig für die Datenrückgewinnung ignoriert werden.

Möglich ist in der Praxis alternativ auch, bei hoher Auslastung des Kommunikationssystems besonders bandbreiteeffizient, also mit hochwertigen Modulationsverfahren zu übertragen. Bei geringer Auslastung kann hingegen mit niederwertigeren Verfahren eine erhöhte Robustheit zugelassen werden.

Die Verfahrensweise ermöglicht es somit insbesondere im Fall einer faltungskodierten Übertragung das Ladeschema implizit während der Dekodierung der Empfangsdaten bzw. empfangenen Symbole zu ermitteln, so dass eine ausdrückliche Signalisierung des senderseitigen Ladeschemas nicht erforderlich ist. Da eine derartige Signalisierung in der Regel mit einer sehr robusten und somit wenig Bandbreite beanspruchenden effizienten Modulation und Kodierung erfolgen müsste, erhöht der Verzicht auf diese Signalisierung die Gesamteffizienz des Kommunikationssystems insbesondere bei einer hohen Systemauslastung oder schlechten Umgebungsbedingungen deutlich.

Ein Ausführungsbeispiel mit verschiedenen Ausführungsformen wird nachfolgend anhand der Zeichnungen näher erläutert. Es zeigen:
- FIG 1: schematisch eine Anordnung von miteinander kommunizierenden Stationen sowie Unterkomponenten in diesen,
- FIG 2A: Unterkomponenten des Systems aus FIG 1 mit einer Skizzierung eines Datenflusses,
- FIG 2B: eine alternative Ausführungsform dazu,
- FIG 3: schematisch die Zuordnung einzelner Modulationssymbole zu Abschnitten in einem Trellis-Diagramm,
- FIG 4: eine vereinfachte grafische Darstellung von Trellis-Segmenten und
- FIG 5: ein erweitertes Trellis-Diagramm zur signalisierungsfreien Detektion und Dekodierung adaptiert modulierter und faltungskodierter Bitfolgen.

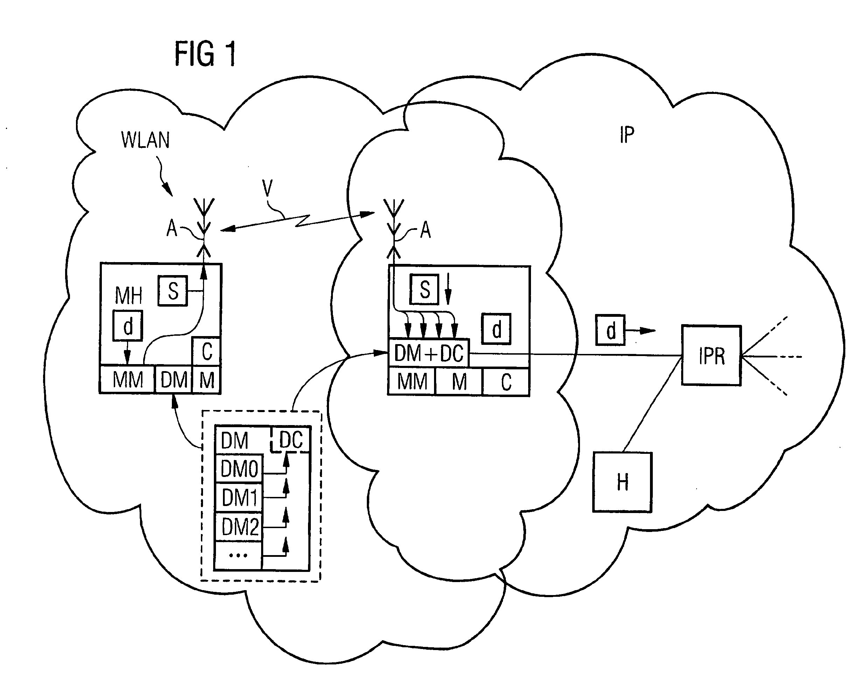

Wie aus FIG 1 ersichtlich, kommunizieren in einem beispielhaften Funk-Kommunikationssystem WLAN (Wireless Local Area Network) zwei Stationen MH (Mobile Host) und AP (Access Point) über eine Funk-Schnittstelle V miteinander. Der Zugriffspunkt ist dabei vorzugsweise mit weiteren netzseitigen Einrichtungen, beispielsweise einem Router IPR oder darüber weiteren Zugangspunkten oder ortsfesten Rechnern bzw. Computern H (Hosts) verbunden. Diese Verbindung wird vorzugsweise kabelgebunden und gemäß dem Internetprotokoll IP aufgebaut und aufrecht erhalten. Prinzipiell ist die nachfolgend beschriebene Verfahrensweise jedoch auch auf andere Kommunikationssysteme, beispielsweise das funkgestützte UMTS (Universal Mobile Telecommunications System) oder auch kabelgebundene Kommunikationssysteme übertragbar.

Für die Verbindung über die Funk-Schnittstelle V soll beispielhaft ein Verfahren verwendet werden, welches auf eine Ressource mit Unter-Ressourcen zurückgreift. Beispielsweise kann dies die bekannte orthogonale Frequenzaufteilungs-Modulation OFDM (Orthogonal Frequency Division Multiplexing) sein. Dabei werden zu übertragende Datensymbole senderseitig auf viele Subträger innerhalb des zur Verfügung stehenden Frequenzbandes aufmoduliert. Auf jedem einzelnen Subträger findet hierbei ein lineares Modulationsverfahren (BPSK, QPSK, ...) Anwendung, wobei unterschiedlichen Subträgern unterschiedliche Modulationsverfahren zugewiesen sein können. Ferner kann sich die Zuweisung über der Zeit ändern. Empfängerseitig wird eine entsprechende Demodulation vorgenommen, um aus den senderseitig erzeugten und über die Funk-Schnittstelle V übertragenen Symbolen s wieder die ursprünglichen Daten d zu rekonstruieren.

Vorteilhafterweise weisen die beiden dargestellten kommunizierenden Stationen für ihren üblichen Betriebsablauf und die beschriebene Verfahrensweise eine Vielzahl von Einrichtungen C, M, MM, DM auf, welche als eigene Bauelemente miteinander kommunizierend ausgebildet sein können oder prozessorgestützt mit entsprechend gespeicherten Funktionen und Daten ausgeführt werden können.

Die miteinander kommunizierenden Stationen MH, AP weisen jeweils eine Steuereinrichtung C auf, die durch einen Prozessor ausgebildet sein kann und für den allgemeinen Betriebsablauf und die Verarbeitung von zu übertragenden bzw. empfangenen Daten ausgelegt ist. In einem Speicher M sind für den Betrieb und die Verarbeitung zu versendender bzw. empfangener Daten erforderliche Parameter und Steueralgorithmen hinterlegt. Au-βerdem bietet der Speicher M Speicherraum zum Zwischenspeichern von zu versendenden bzw. empfangenen Daten, modulierten Symbolen und dergleichen.

Die Verfahrensweise zum Modulieren und Demodulieren von zu übertragenden Daten d wird nachfolgend in der Richtung von der mobilen Station MH zu dem netzseitigen Zugriffspunkt AP beschrieben, wobei die Bezeichnungen senderseitige Station und empfängerseitige Station verwendet werden, da der umgekehrte Sende- und Verfahrensablauf gleichermaßen anwendbar ist.

Zur Modulation von zu versendenden Daten d weisen beide Stationen MH, AP einen Modulationseinrichtung MM auf. Zur Demodulation derart modulierter und als Symbole s übertragener Daten weisen die Stationen MH, AP außerdem jeweils eine Demodulationseinrichtung DM auf. Sowohl die Modulationsreinrichtung MM als auch die Demodulationseinrichtung DM können beispielsweise als eigenständige Bauelemente oder als Bestandteil eines prozessorgesteuerten Verfahrensablaufs realisiert sein. Außerdem möglich sind z.B. Realisierungen in programmierbaren Logikbausteinen (FPGA) oder als Bestandteil eines integrierten Bausteins (ASIC, Spezial-IC), der auch noch andere Baugruppen beinhaltet.

Im Falle einer hardwaremäßigen Umsetzung der Demodulationseinrichtung DM kann diese wahlweise als eine mit Parametern variabel einstellbare Demodulationseinrichtung oder, wie dargestellt, als eine Gruppe von einzelnen Demodulatoren DM0, DM1, DM2, ... ausgebildet sein, welchen ein empfangenes Symbol zur Demodulation mit einem jeweils eigens zugeordneten Demodulationsablauf aus der Vielzahl verschiedenartiger möglicher Demodulationsverfahren zugeführt wird.

Entsprechend kann auch die Modulationsreinrichtung MM verschiedenartig realisiert werden und zur Berücksichtigung verschiedener anwendbarer Modulationsverfahren aus einer Modulationsverfahrens-Auswahl ausgebildet sein.

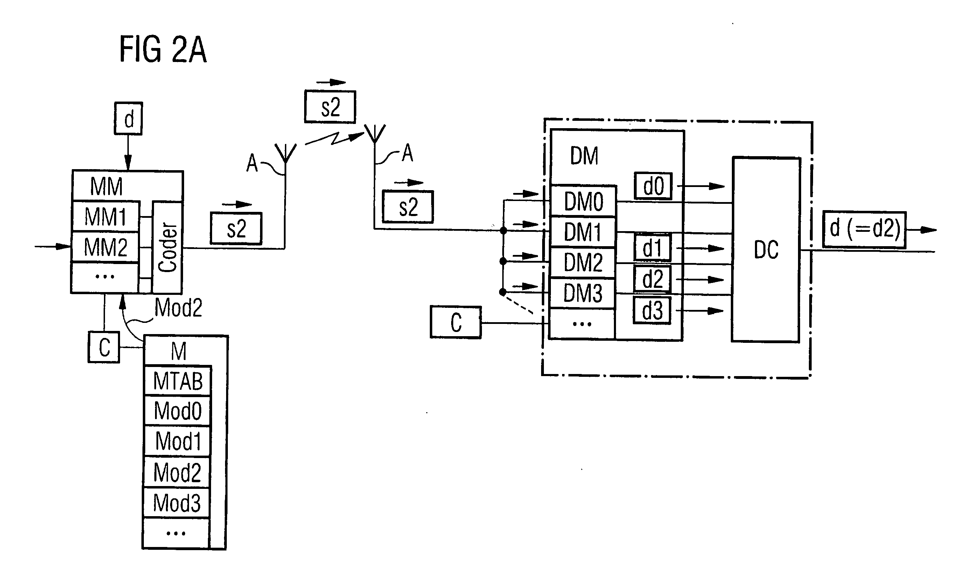

Ein beispielhafter Verfahrensablauf zur Modulation, Übertragung und Demodulation von Daten d ist in FIG 2A dargestellt, wobei die skizzierten Komponenten denen aus FIG 1 entsprechen.

Ein zu versendendes Datenpaket oder Datenbit d, das beispielsweise durch Digitalisierung eines analogen Sprachsignals gewonnen wurde, oder ein von einem mobilen Rechner bereitgestelltes Datenbit bzw. eine Datenbitsequenz wird der Modulationsreinrichtung MM zugeführt. Zuvor oder parallel dazu wird mit Hilfe der Steuereinrichtung C und weiterer dafür erforderlicher Einrichtungen die Übertragungsfunktion des gewünschten Trägers auf der Funk-Schnittstelle V beobachtet. Abhängig davon wird ein Modulationsverfahren Mod0, Mod1, Mod2, ... aus einer Modulationsverfahrens-Auswahl MTAB ausgewählt, die beispielsweise im Speicher M hinterlegt ist. Beim dargestellten Beispiel wird ein Modulationsverfahren Mod2 ausgewählt und die entsprechenden Parameter werden der Modulationseinrichtung MM zugeführt. Die Modulationseinrichtung MM wendet daraufhin das ausgewählte Modulationsverfahren Mod2 auf die dem Modulationsverfahren entsprechende Anzahl aufeinanderfolgender Datenbit an, wodurch ein zu übertragendes Symbol s2 erzeugt wird.

Ein derartiges zu übertragendes Symbol s2 trägt entweder keine Information, die Information von einem einzigen Datenbit d oder auch mehreren Datenbit abhängig davon, ob keine Modulation angewendet wurde, eine einfache Modulation oder eine höherwertige Modulation angewendet wurde. Bei der für sich bekannten Modulation BPSK (Binary Phase Shift Keying) werden jeweils zwei Phasenzustände in einem Symbol zusammengefasst. Bei QPSK (Quadrature Phase Shift Keying) werden mehrere Phasenzustände bzw. zwei Datenbit d zu einem zu übertragenden Symbol s2 zusammengefasst. Bei 16-QAM wird eine kodierte Folge aus vier zu übertragenden Datenbit d zu einem Symbol zusammengefasst, bei 64-QAM eine kodierte Folge aus sechs Bit d zu einem Symbol zusammengefasst.

Je weniger ausgelastet das Kommunikationssystem WLAN mit Blick auf den Träger auf der Funk-Schnittstelle V ist und je weniger dämpfende Einflüsse auf den Träger durch die Umgebungsbedingungen einwirken, desto höherwertiger kann das Modulationsverfahren Mod0, Mod1,... sein, welches für die Modulation einer Folge von zu übertragenden Datenbit verwendet wird. Bei höherwertigen Modulationsverfahren werden dabei jeweils mehrere aufeinanderfolgende Datenbit d zu dem über die Funk-Schnittstelle V zu übertragenden Symbol s2 zusammengefasst.

Empfängerseitig wird entsprechend ein über die Antenne A der empfangenen Station AP empfangenes Symbol s2 demoduliert. Um die ursprünglichen Daten bzw. Datenbit d rekonstruieren zu können, ist es erforderlich, das richtige Demodulationsverfahren auszuwählen, welches dem senderseitigen Modulationsverfahren zugeordnet ist.

Im Fall der Ausführungsform in FIG 2A wird entsprechend eine Vielzahl einzelner Modulatoren DM0, DM1, ... bereitgestellt. Ein über eine Antenne A eintreffendes Symbol s2, welches senderseitig mit dem zweiten Modulationsverfahren Mod2 aus der Vielzahl dort verfügbarer Modulationsverfahren MTAB moduliert wurde, wird empfängerseitig parallel allen vorhandenen Demodulatoren DM0, DM1, ... zugeführt. Jeder einzelne dieser Demodulatoren DM0, DM1, ... wendet das ihm zugeordnete Demodulationsverfahren auf das empfangene Symbol s2 an und gibt je nach verwendetem Demodulationsverfahren ein Datenbit d1 oder eine Bitfolge d2,... als Demodulationsergebnis aus.

Nachfolgend werden diese verschieden demodulierten Daten bzw. Datenbit d1, d2, ..., sowie vorzugsweise für den Fall einer nicht vorgenommenen Demodulation (Mod0) auch ein nicht demoduliertes Datenbit d0, welches dem empfangenen Sendesymbol entspricht, einer Entscheidungseinrichtung DC zugeführt. Die Entscheidungseinrichtung DC trifft dann eine Entscheidung, welche der zugeführten Daten d0, d1, d2, ... mit dem richtigen Demodulationsverfahren DM0, DM1, DM2, ... demoduliert wurden. Sofern keine eindeutige Entscheidung getroffen werden kann, wird von der Entscheidungseinrichtung DC bestimmt, welches der Demodulationsergebnisse am wahrscheinlichsten das richtige Ergebnis ist. Daraufhin wird das ausgewählte Demodulationsergebnis, vorliegend die Daten d2, welche mit dem zweiten Demodulationsverfahren im Demodulator DM2 demoduliert wurden, als rekonstruierte ursprüngliche Daten d bestimmt und zur Weiterverarbeitung oder Ausgabe bereitgestellt.

Die Verfahrensweise ermöglicht somit eine Dekodierung eines empfangenen Symbols s2 ohne Kenntnis des senderseitig verwendeten Ladeschemas bzw. Modulationsverfahrens Mod2.

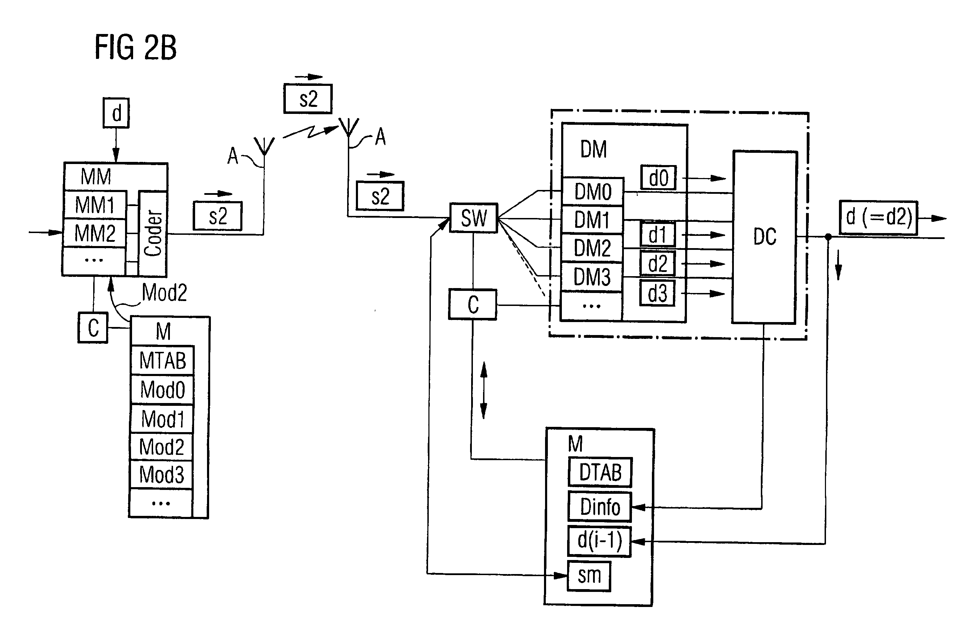

Bei einer komplexeren Ausführungsform, die in FIG 2B dargestellt ist, wird wieder davon ausgegangen, dass senderseitig Daten d mit dem zweiten Modulationsverfahren Mod2 aus der senderseitig verfügbaren Vielzahl von Modulationsverfahren bzw. Modulationsverfahrens-Auswahl MTAB zur Modulation moduliert wurden.

Empfängerseitig wird in einem ersten Verfahrensschritt das über die Antenne A empfangene Symbol s2 einer Schalteinrichtung SW zugeführt, welche von der Steuereinrichtung C gesteuert wird. Je nach Vorgabe durch die Steuereinrichtung C führt die Schalteinrichtung SW das empfangene Symbol s2 einem oder mehreren der Demodulatoren DM0, DM1, DM2 in der Demodulatoreinrichtung DM zu.

Beim dargestellten Ausführungsbeispiel wird davon ausgegangen, dass beispielsweise aufgrund empfängerseitig festgestellter schlechter Umgebungsbedingungen oder Übertragungsqualität ein höherwertiges Modulationsverfahren nicht verwendet werden konnte und somit davon auszugehen ist, dass das hochwertige Demodulationsverfahren DM3 senderseitig nicht verwendet werden konnte. Empfängerseitig kann durch das Auslassen einer oder mehrerer Möglichkeiten für die Anwendung von Demodulationsverfahren Rechenleistung insbesondere in Fällen gespart werden, in denen die Demodulation durch einen Prozessor in serieller Abarbeitung durchgeführt wird.

Wie bei der vorstehend beschriebenen Ausführungsform werden die Demodulationsergebnisse, dass heißt die demodulierten Datenbit oder Daten d1, d2, ..., sowie ein nicht demodulierter Datenwert d0 aus der Demodulationsstufe DM0 der Entscheidungseinrichtung DC zugeführt. Diese bestimmt bei richtiger Bestimmung wiederum den Datenwert d2 aus dem zweiten Demodulator DM2 als den richtig demodulierten Datenwert d und gibt diesen als weiter zu verarbeitenden oder auszugebenden Datenwert d = d2 aus.

Bei dieser bevorzugten Ausführungsform wird von der Entscheidungseinrichtung DC außerdem eine Information DInfo ausgegeben und der Steuereinrichtung C oder einem entsprechenden Speicherraum im Speicher M zugeführt. Die Information kann von der Steuereinrichtung C bei nachfolgenden Verarbeitungsschritten verwendet werden. Beispielsweise kann als Information DInfo das zuletzt verwendete Demodulationsverfahren DM2 mitgeteilt werden, so dass die Steuereinrichtung C für nachfolgend empfangene und zu verarbeitende Symbole s2 festlegen kann, dass nur dieses und andere hinsichtlich der Wertigkeit nicht zu weit entfernte Demodulationsverfahren zur Demodulation verwendet werden.

Die Information DInfo kann aber auch einen Wahrscheinlichkeitswert angeben, welcher besagt, mit welcher Wahrscheinlichkeit die letzte Entscheidung der Entscheidungseinrichtung als richtig oder falsch anzusehen ist. Der Steuereinrichtung C zugeführt oder zwischenzeitlich in der Speichereinrichtung M in einem Speicherfeld d(i-1) hinterlegt werden können auch Daten d, welche von der Entscheidungseinrichtung DC als rekonstruierte und richtig demodulierte Daten d ausgegeben werden. Diese bereits demodulierten und als richtig entschiedenen Daten d können beispielsweise bei weiteren Verarbeitungsschritten berücksichtig werden. Für den Fall, dass senderseitig zu versendende Daten d mit einem Kodierungsverfahren redundant auf eine Vielzahl von zu übertragenden Symbolen s2 verteilt werden, kann beispielsweise empfängerseitig überprüft werden, ob zu Daten d aus einem ersten empfangenen Symbol s2 entsprechende redundante Daten aus den nachfolgend empfangene Symbolen rekonstruiert werden können. Falls nein, können die zuvor empfangenen und ebenfalls in der Speichereinrichtung M in einem entsprechenden Speicherraum sm zwischengespeicherten Symbole s2 erneut einer Verarbeitung zugeführt werden.

Alternativ oder zusätzlich können auch die einzelnen Demodulationsergebnisse d0, d1, d2, ... der Vielzahl von Demodulatoren DM0, DM1, DM2, ... in dem Speicher M zwischengespeichert werden, um auf diese zu einem späteren Zeitpunkt für eine erneute Verarbeitung in der Entscheidungseinrichtung DC zurückgreifen zu können.

Die Entscheidung in der Entscheidungseinrichtung DC, welcher Ausgangsbitstrom, dass heißt welche der verschiedenen demodulierten Daten d0, d1, d2, ... jeweils gültig sind, und welche zu verwerfen sind, wird während der Dekodierung des Faltungscodes mittels des für sich bekannten Viterbi-Algorithmus getroffen. Die Dekodierung wird dabei vorzugsweise in einem erweiterten Trellis-Diagramm vorgenommen, welches neben den möglichen Zuständen und Zustandsübergängen des Faltungscoders auch alle Möglichkeiten der Demodulation berücksichtigt und es somit ermöglicht, anhand von Metrikvergleichen den Pfad der wahrscheinlichsten Sendefolge und des am wahrscheinlichsten verwendeten Ladeschemas zu identifizieren.

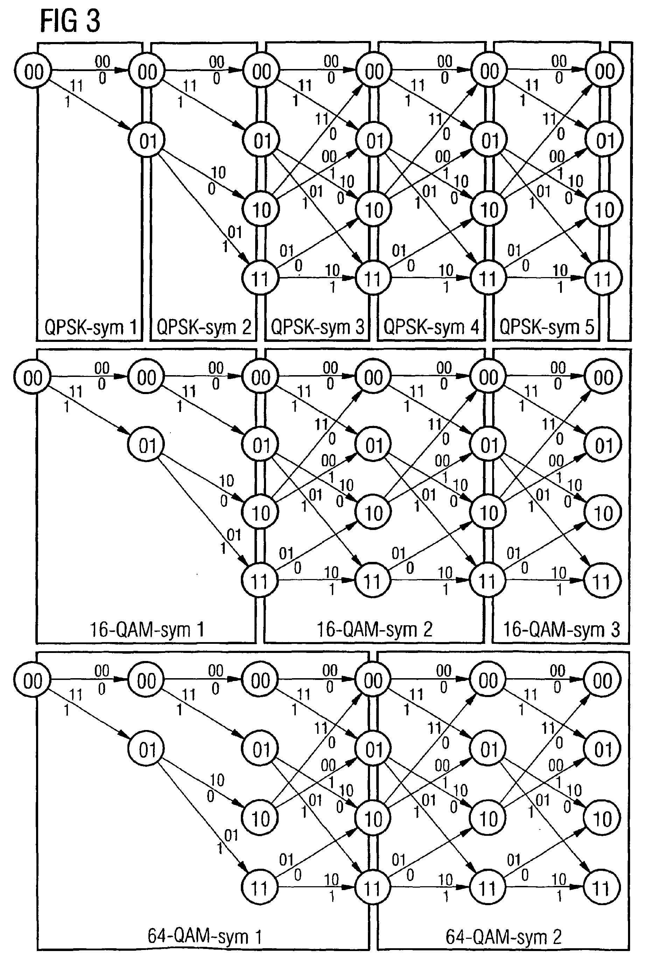

Die Struktur des beispielhaft verwendeten erweiterten Trellis-Diagramms wird nachfolgend anhand eines Beispiels und unter Bezug auf die Figuren 3 - 5 dargestellt.

Senderseitig soll bei diesem Beispiel nur zwischen drei Modulationsverfahren QPSK, 16-QAM (Quadrature Amplitude Modulation) und 64-QAM gewählt werden können. Außerdem soll zur Vereinfachung der senderseitig verwendete Ladealgorithmus die Datenrate und somit die Anzahl von Bit pro kodierter Folge konstant halten. Der verwendete Faltungscode soll zur Vereinfachung die Gedächtnislänge 2 haben, dass heißt der zugehörige Viterbi-Decoder hat ohne eine Erweiterung vier Zustände. Außerdem soll die kodierte Folge nicht punktiert werden. Diese Annahmen dienen lediglich der Vereinfachung der Erläuterung. Abweichende Parameter lassen sich in üblicher Art und Weise und ohne signifikante Veränderung oder mit geringen Modifikationen des Detektionsverfahrens bzw. Detektionsalgorithmus realisieren.

FIG 3 veranschaulicht die Zuordnung von einzelnen Abschnitten im Trellis-Diagramm zu Modulationssymbolen für die drei beispielhaften Modulationsverfahren, wobei zur Veranschaulichung von einer nicht-adaptiven Modulation ausgegangen wird. Das mittlere Diagramm zeigt die Situation im Trellis-Diagramm für eine Modulation mit dem 16-QAM-Verfahren. Jede Spalte 16-QAM sym 1, 16-QAM sym 2 bzw. 16-QAM sym 3 symbolisiert dabei eines der Symbole s, wie sie über die Antenne A der senderseitigen Station MH ausgesendet werden. Dargestellt ist jeweils in einem Kreis ein zweiwertiger Zustand als Ausgangslage. Von diesen Zustand aus führen zwei Möglichkeiten zu einem Folgezustand abhängig davon, ob in den ersten Zustand ein Bit mit dem Wert "1" oder mit dem Wert "0" eingegeben wird. Die eingegebenen Bit sind jeweils unter den von dem dargestellten Zustand nach rechts wegführenden Pfeilen dargestellt. Die aus dem Zustand bei Eingabe eines bestimmten Eingangsbit resultierende Ausgabe ist jeweils über dem jeweiligen Pfeil dargestellt. Ausgehend von zum Beispiel dem ursprünglichen Zustand "00" resultiert bei Eingabe des Bit "0" die Ausgabe "00" bei gleichzeitigem Übergang in den Zustand "00", während nach Eingabe des Bitwertes "1" die Ausgabe "11" lautet und in den Zustand "01" übergegangen wird. Von dem ursprünglichen Zustand "01" ausgehend erfolgt eine Verzweigung zu den nachfolgenden Zustandssymbolen "10" und "11". Vom ursprünglichen Zustand "10" folgt eine Weiterführung zu den nachfolgenden Zuständen "00" und "01". Von letztendlich dem ursprünglichen Zustand "11" findet ein Übergang zu den Zuständen "10" bzw. "11" statt. Anfänglich vom Zustand "00" ausgehend werden in der ersten Folgestufe die beiden Zustände "00" und "01" und in der zweiten Stufe die Zustände "00", "01", "10" und "11" erreicht. Bei der Kodierung wird ein eindeutiger Weg durch ein solches Trellis-Diagramm durchschritten. Um bei der Pfadrückverfolgung im Decoder einen eindeutigen Ausgangspunkt zu gewährleisten, wird häufig durch senderseitiges Anfügen einer Nullsequenz wieder eine Verjüngung des Diagramms auf in der letzten Übertragungsstufe ein einziges Zustandssymbol erzwungen.

In der ersten Zeile ist das Trellis-Diagramm für die QPSK-Modulation dargestellt. Dabei entspricht jede Spalte einem zweiwertigen QPSK-Symbol QPSK-sym 1, QPSK-sym 2, QPSK-sym 3, QPSK-sym 4, QPSK-sym 5. Beispielhaft für eine in dieses Trellis-Diagramm eingegebene Datenfolge werden die nacheinanderfolgend eingegebene Datenbit "0 1 1" betrachtet. Im ersten Schritt vom Zustand "00" ausgehend, wird bei Eingabe des Bit "0" ein erstes Symbol QPSK-sym 1 mit dem Wert "00" ausgegeben. Das zweite ausgegebene Symbol QPSK-sym 2 erhält nach Eingabe des Bit "1" den Wert "11". Das dritte Symbol QPSK-sym 2 erhält nach Eingabe des Bit "1" den Wert "01".

In der dritten Zeile ist das Trellis-Diagramm für das Modulationsverfahren 64-QAM skizziert, bei dem die erzeugten und über die Funk-Schnittstelle übertragenden Symbole 64-QAM-sym 1 bzw. 64-QAM-sym 2 sind.

Wegen der aus der übereinander dargestellten Abfolge der drei Modulationsdiagramme ersichtlichen unterschiedlichen Länge der einzelnen Abschnitte bzw. Symbole, welche über die Funk-Schnittstelle V zu übertragen sind, werden bei der Erstellung eines Trellis-Diagrammes für die Berücksichtigung von Wechseln zwischen einzelnen dieser Modulationsverfahren für aufeinanderfolgend zu übertragende Symbole zusätzliche Pfade eingeführt, so dass ein erweitertes Trellis-Diagramm entsteht. In dem erweiterten Trellis-Diagramm kann nun senderseitig nicht nur zwischen einzelnen Zuständen innerhalb eines Modulationsverfahrens gewechselt werden sondern auch ein Wechsel von einem zu dem anderen Modulationsverfahren vorgenommen werden. Bei den Wechseln ist dabei zu berücksichtigen, dass für die verschiedenen Modulationsverfahren Symbole mit einer unterschiedlichen Anzahl zugeordneter Bit erstellt werden, was insbesondere später beim Dekodieren zu berücksichtigen ist.

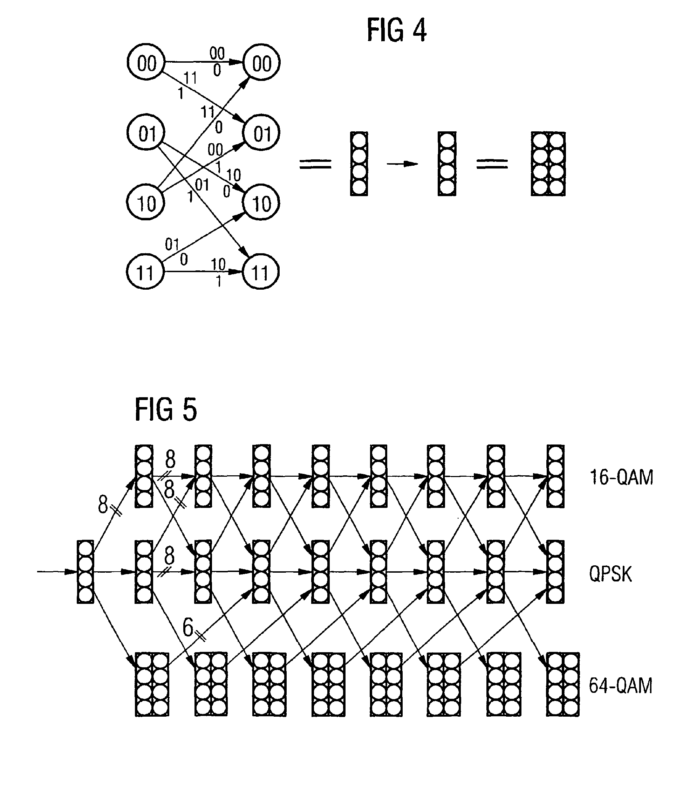

Zur Erläuterung des in FIG 5 dargestellten erweiterten Trellis-Diagramms wird die in FIG 4 dargestellte vereinfachte graphische Repräsentation von Trellis-Segmenten verwendet. Ausgehend in einer ersten Spalte mit den vier möglichen Zuständen "00", "01", "10" und "11" führen die bereits anhand FIG 3 beschriebenen Pfade zu den in der zweiten Spalte beschriebenen Zuständen. Unter den Pfeilen ist wiederum angegeben, welcher Bitzustand in den ersten Zustand eingegeben wurde, um zu dem entsprechenden zweiten Zustand zu gelangen, wobei die Ausgabewerte für das zu erstellende Symbol wiederum oberhalb der Pfeile dargestellt sind. Aus jedem Zustand werden wie zuvor je nach Eingabe eines Bit "0" oder eines Bit "1" zwei vorgegebene Zustände der zweiten Spalte angesteuert, wobei die zweite Spalte für den Zeitpunkt steht, bei dem ein weiteres Bit eingegeben wird, woraufhin ein neues Symbol im Falle einer 2-wertigen Modulation oder die nächsten beiden Bit für das in Erstellung befindliche Symbol, wie bei der 16-QAM, bereitgestellt werden.

Bei dem in FIG 5 dargestellten erweiterten Trellis-Diagramm wird wie bei FIG 3 durch die obere Zeile eine 16-QAM, für die mittlere Zeile eine QPSK-Modulation und für die untere Zeile eine 64-QAM repräsentiert. Jede Spalte der oberen beiden Zeilen entspricht dabei einem Zeitpunkt, zu dem ein weiteres Bit bzw. ein weiterer Datenwert zur Modulation bereitgestellt und verarbeitet wird. Nach jedem der dargestellten Abschnitte, welche einem Modulationssymbol zuzuordnen sind, existieren zusätzliche Verzweigungen, die jeweils einen möglichen Wechsel des Modulationsverfahrens zu Beginn des nächsten Symbols beschreiben. Tatsächlich steht jeder der dargestellten Pfeile für insgesamt 8 Zustandsübergänge, wobei in jedem Schritt von den zugeführten Pfaden eine Auswahl getroffen wird, so dass pro Zustand jeweils nur ein einlaufender Übergang nachfolgend weiter berücksichtigt wird. Bei der Erstellung eines Symbols werden bei QPSK beispielsweise 2 Bit zusammengefasst, bei 16-QAM werden bei einer kodierten Folge 4 Bit zusammengefasst und bei 64-QAM werden bei kodierter Folge 6 Bit zusammengefasst.

Von beispielsweise dem linksseitig ersten Modulationsschritt ausgehend, wird für die Erstellung des nächsten Symbols entschieden, ob wiederum QPSK zur Modulierung der nächsten 2 Bit verwendet wird oder hinsichtlich der Modulation auf zum Beispiel 64-QAM gewechselt wird, wobei dann die nächsten sechs aufeinanderfolgenden Bit zu dem zweiten Symbol zusammengesetzt würden. Zeitlich würde eine Rückverzweigung für die danach erfolgende Erstellung eines dritten Symbols im Falle eines Wechsels zu QPSK zu einem theoretisch vierten Modulationsschritt bei QPSK führen, da zur Modulierung mit ausschließlich QPSK anstelle insgesamt 3 insgesamt 4 Symbole erzeugt worden wären. Nach jeder Symbolerstellung ist wiederum ein Wechsel in ein anderes Modulationssystem möglich, wobei zusätzlich auch hier Wechsel von 64-QAM zu 16-QAM möglich sind. Die Zustände der mittleren Zeile sind in der Figur im Gegensatz zu den Übergängen nicht exklusiv der QPSK zugeordnet, sondern werden z.B. auch beim Wechsel von 16-QAM nach 64-QAM durchlaufen. Bei einer Erweiterung auf weitere verfügbare Modulationsverfahren wird das erweiterte Trellis-Diagramm um weitere Zeilen und Verbindungen erweitert.

Empfängerseitig kann für die umgekehrte Suche nach dem wahrscheinlichsten Pfad bei der senderseitigen Modulation ebenfalls auf das erweiterte Trellis-Diagramm zurückgegriffen werden, wobei der für sich bekannte Viterbi-Algorithmus einfach angewendet werden kann. Bei der Verfahrensweise nach Viterbi wird das erweiterte Trellis-Diagramm von vorne nach hinten abgearbeitet, wobei für je zwei in denselben Zustand hineinlaufende Pfeile jeweils das Beste mögliche Ergebnis bestimmt wird. Anschließend wird von hinten nach vorne der wahrscheinlichste Pfad gesucht, um daraufhin eine Abfolge von empfangenen Bit den Symbolen zuzuordnen und entsprechend eine Rekonstruierung der ursprünglichen Daten vorzunehmen. Der Viterbi-Decoder sucht somit den wahrscheinlichsten Weg durch das Trellis-Diagramm, wobei es sich um ein übliches Optimierungsverfahren handelt. Für die einzelnen Bit wird jeweils geprüft, was wäre, wenn die einzelnen Demodulatoren DM0, DM1, DM2, ... das richtige Ergebnis liefern würden.

In jedem Trellis-Knoten können alle einlaufenden Pfade bis auf denjenigen mit der besten akkumulierten Metrik verworfen werden. Neben der akkumulierten Metrik können auch weitere zusätzliche Kriterien zum Ausschluss von Pfaden in Betracht gezogen werden. Beispielsweise kann festgelegt werden, dass die Anzahl der einem Pfad zugeordneten Modulationssymbole in keinem Knoten die Anzahl der insgesamt übertragenen Symbole übersteigen darf. Ferner können besondere Eigenschaften der senderseitig zur Verfügung stehenden Ladealgorithmen bei der Pfadauswahl berücksichtigt werden. Insbesondere sind dabei Beschränkungen möglich, beispielsweise dass senderseitig bei schlechten Übertragungsfunktionen auf dem gewählten Träger nur bestimmte Modulationsverfahren aus der Modulationsverfahrens-Auswahl, die prinzipiell zur Verfügung stehen würde, verwendet werden dürfen. Empfängerseitig können solche Informationen berücksichtigt werden. Insbesondere kann empfängerseitig berücksichtigt werden, dass in bestimmen Situationen generell nur eine Unterauswahl der insgesamt verfügbaren Modulationsverfahrens-Auswahl bei der Sendestation MH verwendet werden darf, so dass auch empfängerseitig nur die entsprechende Auswahl von Demodulationsverfahren aus der prinzipiell verfügbaren Demodulationsverfahrens-Auswahl DTAB berücksichtigt werden muss. Fehlen solche Informationen kann empfängerseitig auch prinzipiell auf sämtliche theoretisch verfügbaren Demodulationsverfahren zurückgegriffen werden, um die empfangenen Daten bzw. Symbole zu demodulieren.

## Patentansprüche

1. Verfahren in einem Kommunikationssystem mit Multiträger-Übertragungstechnik zum empfängerseitigen Bestimmen einer senderseitig verwendeten Modulation bei adaptiver Modulation, bei dem
- senderseitig eine Modulationsverfahrens-Auswahl (MTAB) mit einer Vielzahl, zumindest zwei verschiedenen Modulationsverfahren (Mod0, Mod1) bereitgestellt wird,
- wobei senderseitig zum Modulieren einer jeweiligen Anzahl aufeinanderfolgender Daten (d) zu einem Symbol (s2) subträgerindividuell jeweils adaptiv eines der zumindest zwei Modulationsverfahren ausgewählt wird, und
- empfängerseitig die modulierten Symbole (s2) empfangen und unter Verwendung von den zumindest zwei Modulationsverfahren zugeordneten Demodulationsverfahren subträgerindividuell demoduliert werden,
**dadurch gekennzeichnet, dass**
bei Metrikvergleichen von Demodulationsergebnissen der zumindest zwei Demodulationsverfahren eine jeweils gleiche Anzahl demodulierter Datenbits aus einer gleichen oder unterschiedlichen Anzahl von jeweiligen Symbolen in Trellis-Knoten eines erweiterten Trellis-Diagramms verglichen wird, und subträgerindividuell aus dem Pfad der wahrscheinlichsten Sendefolge das für das jeweilige Symbol am wahrscheinlichsten gewählte Modulationsverfahren bestimmt wird.

2. Verfahren nach Anspruch 1, bei dem
das Bestimmen eines Demodulationsverfahrens unter Berücksichtigung von Demodulationsergebnissen von vorangehend demodulierten Symbolen durchgeführt wird.

3. Verfahren nach Anspruch 2, bei dem
das Bestimmen eines Demodulationsverfahrens mittels eines Vergleichs von Demodulationsergebnissen von in vorangehend demodulierten Symbolen redundant übertragenen Daten durchgeführt wird.

4. Verfahren nach einem vorstehenden Anspruch, bei dem
das Demodulieren mit den verschiedenen der Demodulationsverfahren seriell mit Zwischenspeicherung oder parallel durchgeführt und der Bestimmung zugeführt wird.

5. Verfahren nach Anspruch 1, bei dem
in jedem Trellis-Knoten alle einlaufenden Pfade bis auf denjenigen mit der besten akkumulierten Metrik verworfen werden.

6. Verfahren nach Anspruch 1 oder 5, bei dem
die Anzahl einem Pfad zugeordneter Modulationssymbole in keinem Trellis-Knoten die Anzahl der insgesamt übertragenen Symbole übersteigt.

7. Verfahren nach Anspruch 1 oder 5, bei dem
zum Bestimmen des Pfades der wahrscheinlichsten Sendefolge Eigenschaften eines senderseitig verwendeten Ladealgorithmus zum subträgerindividuellen adaptiven Auswählen des Modulationsverfahrens berücksichtigt werden.

8. Verfahren nach einem vorstehenden Anspruch, bei dem
beim Bestimmen jeweils eine gleiche Anzahl demodulierter Daten aus empfangenen Symbolen der zumindest zwei Demodulationsverfahren verarbeitet wird.

9. Verfahren nach einem vorstehenden Anspruch, bei dem empfängerseitig bei fehlender Kenntnis über die senderseitig verfügbare Modulationsverfahren Demodulationsverfahren (DM0, DM1, DM2) verwendet werden, welche einer aktuellen Systemauslastung und/oder aktuellen Übertragungsbedingungen bedingungen zugeordnet sind.

10. Vorrichtung für eine Station (MH;AP) eines Kommunikationssystems mit Multiträger-Übertragungstechnik zum subträgerindividuellen Demodulieren empfangener Symbole, welche senderseitig mittels subträgerindividueller adaptiver Modulation mit einem symbolweise ausgewählten Modulationsverfahren (Mod0, Mod1) aus zumindest zwei bereitgestellten Modulationsverfahren moduliert wurden, mit
- einer Steuer- und Verarbeitungseinrichtung (C) zum Steuern und Durchführen der Datenverarbeitung,
- einem Speicher (M) zum Speichern von Symbolen (s2), Daten (d) und Demodulationsverfahrensinformation,
- einer Demodulationseinrichtung (DM) zum subträgerindividuellen Demodulieren der empfangenen modulierten Symbole (s2) mittels den zumindest zwei senderseitigen Modulationsverfahren zugeordneten Demodulationsverfahren, wobei die Demodulationseinrichtung (DM) ausgestaltet ist zum Vergleichen einer jeweils gleichen Anzahl demodulierter Datenbits aus einer gleichen oder unterschiedlichen Anzahl von jeweiligen Symbolen in Trellis-Knoten eines erweiterten Trellis-Diagramms bei Metrikvergleichen von Demodulationsergebnissen der zumindest zwei Demodulationsverfahren, und
- einer Entscheidungseinrichtung (DC) zum subträgerindividuellen Bestimmen des für das jeweilige Symbol am wahrscheinlichsten gewählten Modulationsverfahrens aus dem Pfad der wahrscheinlichsten Sendefolge.

## Claims

1. Method in a communication system using multi-carrier transmission technology for determining, on the receiver side, a modulation method used by the transmitter with adaptive modulation, wherein
- a choice of modulation methods (MTAB) comprising a plurality of, at least two, different modulation methods (Mod0, Mod1) is provided on the transmitter side,
- with one of the at least two modulation methods being selected on the transmitter side for the purpose of modulating, on a subcarrier-specific basis, a respective number of successive data bits (d) adaptively into a symbol (s2) in each case, and
- the modulated symbols (s2) being received on the receiver side and demodulated on a subcarrier-specific basis using demodulation methods assigned to the at least two modulation methods,
**characterised in that**
in metric comparisons of demodulation results of the at least two demodulation methods an equal number of demodulated data bits in each case from an equal or different number of respective symbols is compared in trellis nodes of an extended trellis diagram and the modulation method most probably selected for the respective symbol is determined on a subcarrier-specific basis from the path of the most probable transmit sequence.

2. Method according to claim 1, wherein
a demodulation method is determined taking into account demodulation results of previously demodulated symbols.

3. Method according to claim 2, wherein
a demodulation method is determined by means of a comparison of demodulation results of data transmitted redundantly in previously demodulated symbols.

4. Method according to any one of the preceding claims, wherein
the demodulation with the different demodulation methods is performed serially with buffering or in parallel and supplied for determination.

5. Method according to claim 1, wherein
in each trellis node, all incoming paths except for the one with the best accumulated metric are discarded.

6. Method according to claim 1 or 5, wherein
in no trellis node does the number of modulation symbols assigned to a path exceed the total number of symbols transmitted.

7. Method according to claim 1 or 5, wherein
in order to determine the path of the most probable transmit sequence, properties of a load algorithm used on the transmitter side are taken into account for subcarrier-specific adaptive selection of the modulation method.

8. Method according to any one of the preceding claims, wherein
during the determination, an equal number of demodulated data bits from received symbols of the at least two demodulation methods is processed in each case.

9. Method according to any one of the preceding claims, wherein
on the receiver side, in the absence of knowledge of the modulation methods available on the transmitter side, demodulation methods (DM0, DM1, DM2) are used which are assigned to a current system utilisation and/or current transmission conditions.

10. Device for a station (MH; AP) of a communication system using multi-carrier transmission technology for subcarrier-specific demodulation of received symbols which have been modulated on the transmitter side by means of subcarrier-specific adaptive modulation using a modulation method (Mod0, Mod1) selected symbol by symbol from at least two modulation methods provided, comprising
- a control and processing device (C) for controlling and performing the data processing,
- a memory (M) for storing symbols (s2), data (d) and demodulation method information,
- a demodulation device (DM) for subcarrier-specific demodulation of the received modulated symbols (s2) by means of demodulation methods assigned to the at least two transmitter-side modulation methods, the demodulation device (DM) being embodied for comparing an in each case equal number of demodulated data bits from an equal or different number of respective symbols in trellis nodes of an extended trellis diagrams in metric comparisons of demodulation results of the at least two demodulation methods, and
- a decision device (DC) for subcarrier-specific determination of the modulation method most probably selected for the respective symbol from the path of the most probable transmit sequence.

## Revendications

1. Procédé pour déterminer côté récepteur une modulation employée côté émetteur dans un système de communication utilisant une technique de transmission multiporteuse avec modulation adaptative, dans lequel
- côté émetteur, on met à disposition une sélection de procédés de modulation (MTAB) comprenant une multitude, au moins deux procédés de modulation différents (Mod0, Mod1),
- côté émetteur, afin de moduler un nombre respectif de données (d) successives pour former un symbole (s2), un desdits au moins deux procédés de modulation étant sélectionné individuellement pour chaque sous-porteuse, à chaque fois de manière adaptative, et
- côté récepteur, les symboles (s2) modulés étant reçus et démodulés individuellement pour chaque sous-porteuse à l'aide de procédés de démodulation affectés auxdits au moins deux procédés de modulation,
**caractérisé en ce que**
lors de comparaisons de la métrique de résultats de démodulation desdits au moins deux procédés de démodulation, on compare un nombre à chaque fois identique de bits de données démodulés à partir d'un nombre identique ou différent de symboles respectifs dans des noeuds du treillis d'un diagramme en treillis élargi, et on détermine individuellement pour chaque sous-porteuse, à partir du chemin de l'ordre des émissions le plus probable, le procédé de modulation sélectionné le plus probable pour le symbole respectif.

2. Procédé selon la revendication 1, dans lequel
on réalise la détermination d'un procédé de démodulation en tenant compte de résultats de démodulation de symboles démodulés précédemment.

3. Procédé selon la revendication 2, dans lequel
on réalise la détermination d'un procédé de démodulation au moyen d'une comparaison de résultats de démodulation de données transmises de manière redondante dans des symboles démodulés précédemment.

4. Procédé selon une revendication précédente, dans lequel
on réalise la démodulation à l'aide des différents procédés de démodulation de manière sérielle avec stockage intermédiaire ou de manière parallèle, et on l'achemine vers la détermination.

5. Procédé selon la revendication 1, dans lequel
dans chaque noeud du treillis, tous les chemins entrants sont rejetés, à l'exception de celui ayant la meilleure métrique accumulée.

6. Procédé selon la revendication 1 ou 5, dans lequel
le nombre de symboles de modulation affectés à un chemin ne dépasse dans aucun noeud du treillis le nombre de symboles transmis au total.

7. Procédé selon la revendication 1 ou 5, dans lequel
en vue de déterminer le chemin de l'ordre des émissions le plus probable, on tient compte des propriétés d'un algorithme de chargement employé côté émetteur pour la sélection adaptative individuelle pour chaque sous-porteuse du procédé de modulation.

8. Procédé selon une revendication précédente, dans lequel
on traite pendant la détermination un nombre à chaque fois identique de données démodulées à partir de symboles reçus desdits au moins deux procédés de démodulation.

9. Procédé selon une revendication précédente, dans lequel
on utilise côté récepteur, en l'absence de connaissance des procédés de modulation disponibles côté émetteur, des procédés de démodulation (DM0, DM1, DM2) affectés à une charge de travail de système actuelle et/ou à des conditions de transmission actuelles.

10. Dispositif pour une station (MH;AP) d'un système de communication utilisant une technique de transmission multiporteuse pour démoduler individuellement pour chaque sous-porteuse des symboles reçus qui ont été modulés côté émetteur, au moyen d'une modulation adaptative individuellement pour chaque sous-porteuse, à l'aide d'un procédé de modulation (Mod0, Mod1) sélectionné par symbole parmi au moins deux procédés de modulation mis à disposition, comprenant
- un dispositif de commande et de traitement (C) pour commander et effectuer le traitement de données,
- une mémoire (M) pour enregistrer des symboles (s2), des données (d) et des informations relatives aux procédés de démodulation,
- un dispositif de démodulation (DM) pour démoduler individuellement pour chaque sous-porteuse les symboles (s2) modulés reçus au moyen de procédés de démodulation affectés auxdits au moins deux procédés de modulation côté émetteur, le dispositif de démodulation (DM) étant configuré pour comparer un nombre à chaque fois identique de bits de données démodulés à partir d'un nombre identique ou différent de symboles respectifs dans des noeuds du treillis d'un diagramme en treillis élargi lors de comparaisons de la métrique de résultats de démodulation desdits au moins deux procédés de démodulation, et
- un dispositif de décision (DC) pour déterminer, à partir du chemin de l'ordre des émissions le plus probable, individuellement pour chaque sous-porteuse le procédé de modulation le plus probable sélectionné pour le symbole respectif.
